# EUROPÄISCHE PATENTSCHRIFT

(11) **EP 0 487 491 B1**
(45) Veröffentlichungstag und Bekanntmachung des Hinweises auf die Patenterteilung: **04.10.1995**
(21) Anmeldenummer: 91890276.8
(22) Anmeldetag: 13.11.1991
(51) Int. Cl.: G01N 35/10, B01L 11/00

(54) **Zwischenträgerstück**
Intermediate member piece
Dispositif à porteuse intermédiaire

(30) Priorität: 20.11.1990 AT 2357/90
(43) Veröffentlichungstag der Anmeldung: 27.05.1992
(73) Patentinhaber: ART BICKFORD & CO. GESELLSCHAFT M.B.H., 2700 Wiener Neustadt (AT)
(72) Erfinder: Lacher, Johann, A-2380 Perchtoldsdorf (AT)
(74) Vertreter: Wildhack, Helmut, Dipl.-Ing. Dr.

(56) Entgegenhaltungen:
- EP-A- 0 048 452
- DE-B- 2 841 086

## Beschreibung

Die Erfindung bezieht sich auf ein Zwischenträgerstück als Verbindung zwischen einem Primärgefäß und dem Transportwagen eines Probenverteilers zur Verteilung von Probengut aus dem Primärgefäß in Sekundärgefäße, gemäß dem oberbegriff von Anspruch 1.

Bekanntlich besteht auf zahlreichen Gebieten das Erfordernis, Probengut einer Reihe von Untersuchungen zu unterwerfen, welche Untersuchungen für die jeweilige Probe nicht immer gleich sein müssen. Zumeist werden solche Proben in großer Anzahl in Primärgefäßen angeliefert, z.B. auf dem Gebiet medizinisch-technischer Untersuchungen in Kliniken, Laboratorien usw., aber auch auf dem Gebiet der Materialuntersuchung und auch auf anderen Gebieten. Eine händische Verteilung von Probengut aus dem Primärgefäß der jeweils zur Verwendung kommenden Sekundärgefäße verbietet sich schon im Hinblick auf die in der Regel hohe Anzahl der Primärgefäße, aber auch aus Gründen einer Vermeidung von Fehlern, welche insbesondere auf medizinischem Gebiet schwerwiegende Folgen haben können. Es wurde daher bereits eine Vorrichtung zur Verteilung von Proben aus Primärgefäßen der eingangs geschilderten Art vorgeschlagen (EP-A-48 452). Bei dieser bekannten Vorrichtung wird das Primärgefäß mit nach oben weisendem Ausgußrohr am Transportwagen befestigt und sodann gedreht, sodaß das Ausgußrohr nach unten weist. Der Transportwagen fährt anschließend in die durch einen Rechner entsprechend einem vorgegebenen Programm bestimmten Abgabepositionen, in denen mittels des Diluters der Reihe nach eine Teilmenge der Probe vom Primärgefäß in die jeweiligen Sekundärgefäße abgegeben wird. Das Zwischenträgerstück dient als Mittel zur Befestigung des Primärgefäßes am Transportwagen und ist bei einer Ausführungsform von einer Zange gebildet, deren beide Schenkel einen Flansch des Verschlußstopfens des Primärgefäßes zwischen sich einklemmen, wobei der eine Schenkel mit einer Verlängerung in eine entsprechende Ausnehmung der Halterung des Transportwagens eingeführt wird. Diese Verlängerung ist als gelenkige oder biegsame Nase ausgebildet, die in nicht fixierter Stellung durch eine Feder od. dgl. abgelenkt ist und hiebei die durch die Nase geführte Luftleitung des Diluters absperrt.

Bei einer anderen Variante der bekannten Vorrichtung greift über den Boden des Primärgefäßes ein in Richtung der Gefäßachse spannbares Hohlstück, welches an einer am Transportwagen befestigten Führung längsverschiebbar geführt ist und durch eine Feder in seiner Achsrichtung gegen eine am Transportwagen befestigte Aufnahme gedrückt wird, in welche das Verschlußstück des Primärgefäßes eingreift.

Beide Konstruktionen haben den Nachteil, daß das Primärgefäß nicht oder nur mit erheblichem Aufwand maschinell am Transportwagen zu befestigen ist. Die erstgenannte Variante hat zudem den Nachteil einer unzuverlässigen Befestigung des Primärgefäßes am Transportwagen mit allen damit verbundenen Risken, insbesondere eines Verlustes der Probe und der damit in der Regel verbundenen Kontaminierung anderer Proben bzw. der Vorrichtung.

Die Erfindung setzt sich zur Aufgabe, diese Nachteile zu vermeiden und ein Zwischenträgerstück für einen Probenverteiler der eingangs geschilderten Art so zu verbessern, daß das Primärgefäß mit geringem Aufwand und sicher automatisch ergriffen und wieder freigegeben werden kann, sodaß ein einwandfreier Transport des Primärgefäßes entlang seines Abgabeweges über die Sekundärgefäße und nach Abgabe der Probenteilmengen in die Sekundärgefäße wieder zurück in die Ausgangsstellung gewährleistet ist. Die Erfindung löst diese Aufgabe mittels der im kennzeichnenden Teil von Anspruch 1 angegebenen Merkmale. Auf diese Weise lassen sich die Spannbauteile des Zwischenträgerstückes leicht auf das aufrecht stehende Primärgefäß absenken und nach radialer Einwärtsbewegung ist das Primärgefäß am Zwischenträgerstück unbeweglich festgeklemmt. Das Primärgefäß wird nun vom Transportwagen angehoben - oder der Transportwagen selbst wird angehoben und nimmt das an ihm befestigte Primärgefäß mit sich - und fährt in die erste Abgabestellung. Währenddessen oder danach wird das Zwischenträgerstück relativ zum Transportwagen verschwenkt, sodaß das Ausgußrohr nach unten weist. Es kann nun in der eingangs beschriebenen Weise die Abgabe der Probenteilmengen in die Sekundärgefäße mittels des Diluters erfolgen, wonach das Zwischenträgerstück wieder zurückgedreht wird, sodaß das Ausgußrohr wieder nach oben weist. Nach Rücktransport des Primärgefäßes in seine Ausgangslage werden die Spannbauteile vom Primärgefäß wieder gelöst und die beschriebenen Vorgänge wiederholen sich an einem anderen Primärgefäß. Es entfällt also jegliche manuelle Betätigung und die beschriebenen Vorgänge lassen sich automatisch mit geringem Aufwand durchführen. Während bei der zuvor beschriebenen bekannten Konstruktion bei deren erstgenannter Variante zunächst das Zwischenträgerstück am Verschlußteil des Primärgefäßes befestigt und sodann die so gebildete Baugruppe am Transportwagen festgelegt werden muß, ist beim erfindungsgemäßen Zwischenträgerstück lediglich ein Vorgang nötig, da Absenkung und Einwärtsbewegung der Spannbauteile im wesentlichen gleichzeitig erfolgen können. Auch bei der zweitgenannten bekannten Variante sind zwei Vorgänge nötig, nämlich zuerst die Absenkung des Hohlstückes soweit, daß das Primärgefäß in die Aufnahme eingesetzt werden kann und dann (nach Einsetzen des Primärgefäßes) die Freigabe des Hohlstückes. Die erfindungsgemäße Ausbildung hat darüberhinaus den Vorteil, daß der Boden des Primärgefäßes frei ist, sodaß das Primärgefäß bei seinem Transport nicht so weit angehoben werden muß.

Gemäß einer Weiterbildung der Erfindung sind die Antriebe für die Schwenkbewegung des Zwischenträgerstückes und die Bewegung der Spannbauteile am Transportwagen vorgesehen und es sind unterschiedliche Zwischenträgerstücke mittels eines Wechselverschlusses an diese Antriebe anschließbar. Dies ermöglicht auf einfache Weise den Übergang von einer Primärgefäßart bzw. einer Art des Verschlußstopfens auf eine andere Art, welche eine andere Ausbildung der Spannbauteile bedingt. Es können daher an verschiedene, in der Praxis in Frage kommende Primärgefäßarten bzw. deren Verschlüsse angepaßte Zwischenträgerstücke auf Vorrat gehalten werden, wobei jeweils das geeignete Zwischenträgerstück mittels des Wechselverschlusses am Transportwagen befestigt wird.

Gemäß einer Weiterbildung der Erfindung trägt ein Grundkörper des Zwischenträgerstückes an einer Stirnseite den Wechselverschluß zum Anschluß an ein Drehgelenk mit horizontaler Drehachse und es ist dieser Grundkörper an seinem anderen Stirnende mit einer Aussparung zur Lagerung der Spannbauteile versehen, wobei die Achse dieser Lagerung normal zur Längsachse des Grundkörpers liegt. Dies ergibt die platzsparendste Bauweise.

Es ist bekannt, die Leitung für das gasförmige Medium als flexibler Schlauch auszubilden. Dieses Grundprinzip kann auch bei der erfindungsgemäßen Konstruktion Verwendung finden, jedoch empfiehlt es sich im Rahmen der Erfindung, diese Leitung den Wechselverschluß durchsetzen zu lassen, wobei der Wechselverschluß vorzugsweise als Steckverbindung ausgebildet ist. In diesem Fall ist ein rascher Wechsel, etwa für den oben erwähnten Austausch unterschiedlicher Zwischenträgerstücke gegeneinander, möglich.

Es wäre im Prinzip denkbar, die Spannbauteile als sich verengenden Klemmring auszubilden. Günstiger ist es jedoch im Rahmen der Erfindung, die Spannbauteile als Spannkrallen auszubilden, die um den Umfang des Verschlußstopfens verteilt an diesem angreifen.

Weitere Kennzeichen und Vorteile der Erfindung ergeben sich aus der Beschreibung eines Ausführungsbeispieles der Erfindung, welches in der Zeichnung schematisch dargestellt ist. Fig.1 zeigt in vereinfachter Darstellung den Transportablauf zwischen den Primär- und Sekundärgefäßen. Die Fig.2 bis 5 zeigen vier aufeinanderfolgende Phasen der Befestigung des Primärgefäßes am Zwischenträgerstück bzw. der Abgabe des Probengutes. Fig.6 ist ein Längsschnitt durch das am Drehgelenk des Transportwagens befestigte Zwischenträgerstück. Die Fig. 7 und 8 zeigen in zwei verschiedenen Schnitten die Ausbildung und Verstellung der Spannkrallen und Fig.9 zeigt in Ansicht den Betätigungsmechanismus für die Spannkrallen.

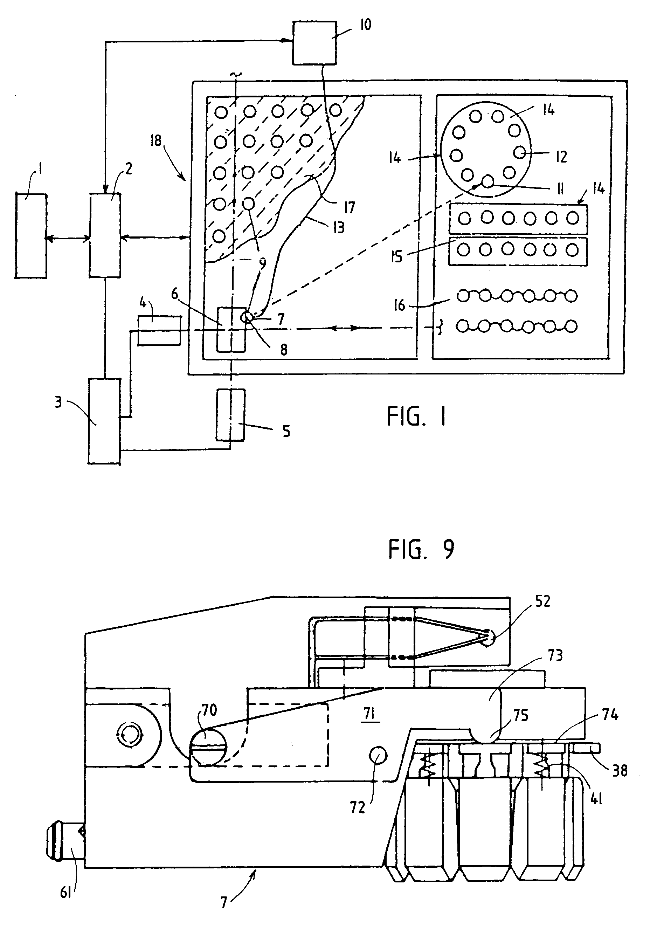

Fig.1 zeigt einen Probenverteiler 18, in welchem die Bewegung des jeweils erfaßten Primärgefäßes 9 von einem Rechner 1 mit zugeordnetem Interface 2 gesteuert wird, wobei an das Interface 2 eine Koordinatensteuerung 3 für zwei Schrittmotore 4,5 angeschlossen ist, welche den mit einer als Zwischenträgerstück 7 ausgebildeten Transportwagen 6 für das Primärgefäß 9 in der x-y-Ebene bewegen und auf den jeweils gewünschten Ort einstellen. Zusätzlich hiezu kann eine Bewegung des Transportwagens 6 in der z-Richtung (normalstehend auf die x-y-Ebene) erfolgen, wenn dies gewünscht ist. Im angenommenen Beispiel erfolgt die Einstellung des Transportwagens 6 zunächst in einer Aufnahmeposition 8 oberhalb eines Primärgefäßes 9, nimmt dort das Primärgefäß 9 auf, dreht es um 180° und transportiert es in Richtung der gestrichelten Pfeillinie in eine oberhalb der Einstellposition eines Sekundärgefäßes 12 gegebene Abgabeposition 11. Der Transportwagen 6 ist über eine als flexibler Schlauch ausgebildete Leitung 13 für ein gasförmiges Medium, insbesondere Luft, mit einem Diluter 10 verbunden, mit welchem Luft oder ein anderes gasförmiges Medium dem Primärgefäß 9 zugeführt oder aus diesem abgesaugt werden kann. Hiedurch läßt sich in an sich bekannter Weise die Abgabe vorbestimmter Teilmengen der Probe aus dem Primärgefäß 9 steuern. Die Sekundärgefäße 12 sind in der Regel in Gefäßträgern 14 gehaltert, welche von runden Tellern 14' oder von Racks 15 gebildet sein können. Es ist jedoch auch möglich, die Sekundärgefäße in Reihe hintereinander oder durch Verbindungsketten 16 gekoppelt anzuordnen usw. Die Primärgefäße 9 sind in der Regel in einer auswechselbaren, als Palette ausgebildeten Halterung 17 untergebracht.

Nach Beendigung des Abgabevorganges aus dem jeweiligen Primärgefäß 9 wird dieses wieder zurück in seine Ausgangsposition gebracht, um 180° geschwenkt und wieder in der Halterung 17 an seiner ursprünglichen Stelle abgesetzt. Sodann fährt der Transportwagen 6, bewegt durch die Schrittmotore 4,5 (und gegebenenfalls einen weiteren, die Bewegung in der z-Achse bewirkenden Motor) in die dem nächsten Primärgefäß 9 zugeordnete Aufnahmeposition 8 und die beschriebenen Vorgänge wiederholen sich. Die den einzelnen Primärgefäßen 9 zugeordneten Abgabepositionen 11 sind in der Regel unterschiedlich, können jedoch in Sonderfällen auch gleich sein.

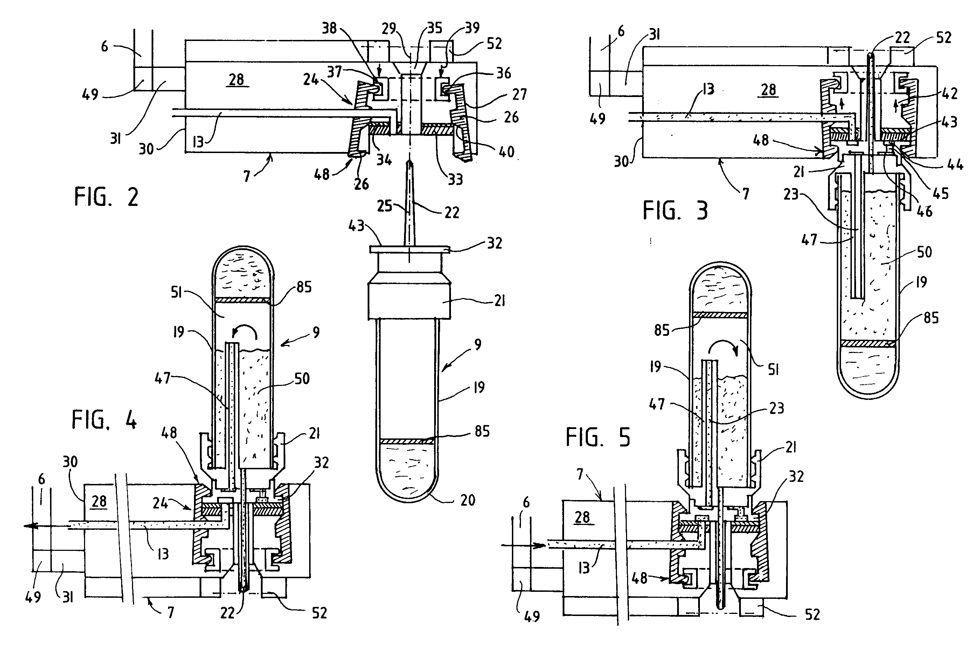

Jedes Primärgefäß 9 (Fig.2) besteht in der Regel aus einem Glasröhrchen 19, dessen Boden 20 geschlossen ist und dessen oberes offenes Ende durch einen Verschlußstopfen 21 verschlossen ist, der einerseits von dem mittigen Kanal eines Ausgußrohres 22, anderseits von einer das gasförmige Medium führenden Leitung 23 durchsetzt ist, welche letztere Leitung 23 an die zum Diluter 10 (Fig.1) führende Leitung 13 im Zwischenträgerstück 7 anschließbar ist. Hiezu und zur Befestigung des Primärgefäßes 9 bzw. seines Verschlußstopfens 21 am Zwischenträgerstück 7 hat dieses Spannbauteile 24, welche einerseits in Bezug auf das Zwischenträgerstück 7 absenkbar bzw. hebbar, anderseits in radialer Richtung der Achse 25 des Primärgefäßes bewegbar sind und hiefür bewegliche Spannkrallen 26 aufweisen. Die Spannbauteile 24 sind in einer Aussparung 27 des länglichen Grundkörpers 28 des Zwischenträgerstückes 7 gelagert, was später noch mehr beschrieben wird. Diese Aussparung 27 befindet sich am einen Ende des Grundkörpers 28 und hat eine Achse 29, die mit der Achse des festgespannten Primärgefäßes 9 zusammenfällt und normal steht auf die Richtung der Längserstreckung des Grundkörpers 28. Dieser ist an seinem anderen Stirnende 30 mit einem Anschluß 31 zur schwenkbaren Verbindung mit dem Transportwagen 6 bzw. einer Halterung desselben verbunden, was später noch näher beschrieben wird.

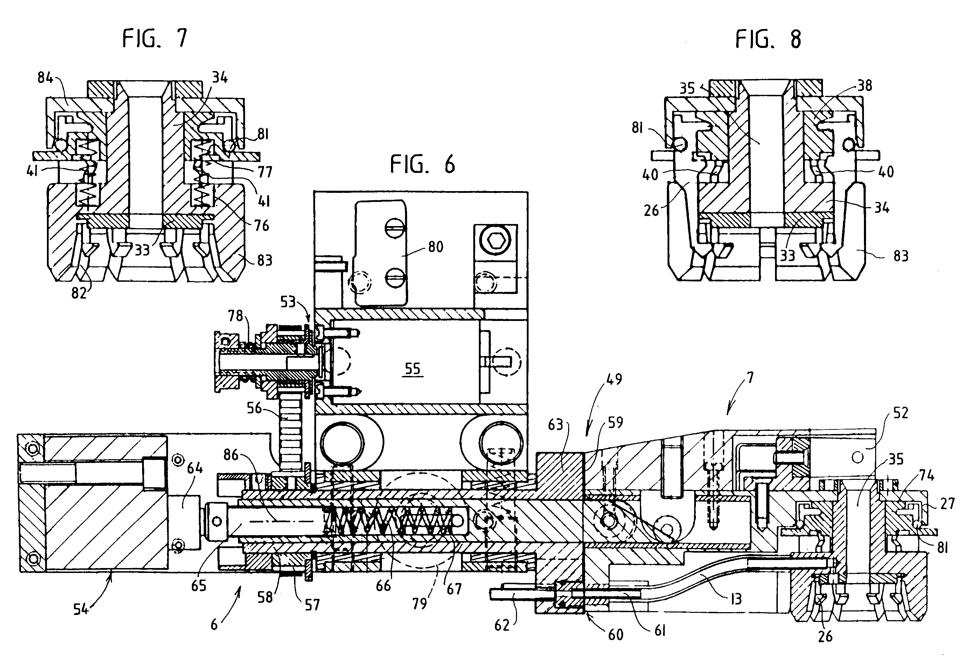

Fig.2 zeigt die Spannkrallen 26 in der geöffneten Stellung, bevor der Transportwagen 6 soweit abgesenkt wird, daß die Spannkrallen einen Flansch 32 des Verschlußstopfens 21 des Primärgefäßes 9 umgreifen und durch Einwärtsbewegung gegen die Achse 29 zu und Anhebung der Spannkrallen 26 gegen eine Dichtung 33 ziehen (Fig.3). Diese Dichtung 33 ist von einem ortsfesten Abstützteil 34 abgestützt und ebenso wie dieser von einer mittigen Öffnung 35 durchsetzt, durch welche das Ausgußrohr 22 hindurchtreten kann. Zur Bewegung der Spannkrallen 26 greifen deren obere Enden mit nach innen gewendeten Fortsätzen 36 in eine Umfangsnut 37 eines Spannringes 38 ein, der in Richtung der Achse 29 im Grundkörper 28 verschiebbar geführt ist. Wird dieser Spannring 38 in Richtung der Pfeile 39 abwärts bewegt, so werden die Spannkrallen 26 nach unten gedrückt, sodaß Schrägflächen 40 derselben zur Anlage an den Abstützteil 34 gelangen, sodaß die unteren Enden der Spannkrallen 26 in radialer Richtung nach außen bewegt werden (Fig.2). In dieser Stellung wird der das Zwischenträgerstück 7 tragende Transportwagen 6 abgesenkt. Hiebei tritt das Ausgußrohr 22 in die Öffnung 35 ein und bildet hiemit eine Zentrierung. Sobald die unteren Enden der Spannkrallen 26 den Flansch 32 passiert haben, wird der Druck auf den Spannring 38 weggenommen, sodaß der Spannring 38 unter Wirkung von Federn 41 (Fig.7) in Richtung der Pfeile 42 (Fig.3) nach oben bewegt wird. Hiedurch werden die Spannkrallen 26 unter der Wirkung eines elastischen Ringes 81 (Fig.7,8) nach innen geschwenkt, sodaß die Haken an den unteren Enden der Spannkrallen 26 die Bodenfläche des Flansches 32 hintergreifen. Der Flansch 32 wird dadurch erfaßt und gegen die Dichtung 33 gezogen. Hiedurch wird das Primärgefäß 9 sicher am Zwischenträgerstück 7 verankert. Die Drehstellung des Primärgefäßes 9 ist hiebei belanglos, da sein Verschlußstopfen 21 an seiner Deckfläche 43 (Fig.2) eine Umfangsnut 44 (Fig.3) hat, die so angeordnet ist, daß die Leitung 13 in jeder Drehstellung des Primärgefäßes 9 auf diese Nut 44 trifft, welche über eine axiale Bohrung 45 und eine Ringnut 46 mit der Leitung 23 in Verbindung steht. Die Leitung 23 befindet sich in einem vom Verschlußstopfen 21 nach unten weisenden Fortsatz 47, welcher sich zumindest über die halbe Höhe des Glasröhrchens 19 erstreckt, das zweckmäßig in einem Bodenbereich mit einem Trennfilter 85 versehen ist.

Das auf diese Art von den Spannbauteilen 24 nach Art einer Zange 48 (Fig.3) ergriffene Primärgefäß 9 kann nun zur Abgabeposition transportiert und zuvor, währenddessen oder danach um 180° um eine horizontale Achse geschwenkt werden, sodaß das Ausgußrohr 22 nach unten weist. Die so erreichte Stellung ist in Fig.4 dargestellt. Die erwähnte Schwenkung erfolgt mittels eines Antriebes über eine Verbindung 49 (Fig.2), welche die erwähnte Schwenkbewegung zuläßt und später noch näher beschrieben wird. Um in der Stellung nach Fig.4 zu verhindern, daß durch das Ausgußrohr 22 unbeabsichtigt Probenmaterial 50 aus dem Primärgefäß 9 austritt, wird vor der erwähnten Verschwenkung des Primärgefäßes 9 in diesem mittels des Diluters 10 und der Leitung 13 ein Unterdruck erzeugt, welcher nach der Schwenkung des Primärgefäßes 9 im Raum 51 oberhalb des Probenmateriales 50 herrscht und dadurch dieses im Primärgefäß 9 zurückhält. Eine Durchflußoptik 52 kann dies überwachen.

Sobald das Primärgefäß 9 vom Transportwagen 6 in die Abgabestellung über dem gewünschten Sekundärgefäß 12 (Fig.1) gebracht ist, wird mittels des Diluters 10 im Raum 51 ein Überdruck erzeugt, was einen Austritt von Probenmaterial 50 durch das Ausgußrohr 22 zur Folge hat (Fig.5). Größe und Dauer des Überdruckes bestimmen hiebei die Menge des abzugebenden Probenmateriales 50. Der Austritt des Probenmateriales 50 aus dem Ausgußrohr 22 kann wieder mittels der Durchflußoptik 52 überwacht werden. Sobald das betreffende Sekundärgefäß 12 die erforderliche Menge an Probenmaterial 50 aus dem Primärgefäß 9 erhalten hat, wird im Raum 51 wieder Unterdruck erzeugt und somit der Austritt von Probenmaterial 50 verhindert. Das Primärgefäß 9 wird nun über das nächste Sekundärgefäß 12 gefahren und die beschriebenen Vorgänge wiederholen sich dort und analog auch für alle weiteren Sekundärgefäße, welche Probenmaterial 50 aus dem in Rede stehenden Primärgefäß 9 erhalten sollen. Nach Beschickung des letzten, vom Rechner 1 (Fig.1) bestimmten Sekundärgefäßes 12 wird das Primärgefäß 9 wieder in seine Ausgangsposition zurückgefahren und wieder in die Stellung nach Fig.3 gebracht, in welcher das Ausgußrohr 22 nach oben weist. In dieser Stellung wird das Primärgefäß 9 durch Öffnung der Zange 48 freigegeben und somit in seine Halterung 17 (Fig.1) abgesetzt. Die beschriebenen Vorgänge wiederholen sich für das nächste Primärgefäß 9.

In Fig.6 ist der Anschluß 49 zur schwenkbaren Verbindung des Zwischenträgerstückes 7 mit dem Transportwagen 6 näher dargestellt. Der Transportwagen 6 trägt hiebei einen Antrieb 53 für die Verschwenkung des Zwischenträgerstückes 7 um eine horizontale Achse und einen Antrieb 54 für die erwähnte Bewegung der Spannkrallen 26. Der Antrieb 53 hat einen Elektromotor 55, der mittels eines Zahnriemens 56 einen Zahnkranz 57 vertdreht, welcher drehschlüssig auf eine Hülse 58 aufgesetzt ist, an deren Stirnende 59 das Zwischenträgerstück 7 mittels eines Wechselverschlusses 60 leicht auswechselbar angeschlossen ist. Dieser Wechselverschluß 60 ist als Steckverbindung ausgebildet, welche auch eine Steckverbindung 61 zum Anschluß der Leitung 13 aufweist, welche linksseitigg des Wechselverschlusses 60 als flexibler Schlauch 62 fortgesetzt ist. Die Steckverbindung 61 bildet zugleich eine Drehsicherung für die Mitnahme des Zwischenträgerstückes 7, sobald die Hülse 58, deren Stirnende zu einem Flansch 63 verbreitert ist, verdreht wird.

Der Antrieb 54 hat einen doppelt wirkenden pneumatischen Zylinder 64, aus welchem ein Kolben 65 ausfahrbar und wieder einziehbar ist. Der Kolben 65 drückt unter Zwischenschaltung einer Feder 66 auf eine Stange 67, deren dem Zylinder 64 abgewendetes Ende aus dem Flansch 63 vorragt und in eine entsprechende Führung 68 des Zwischenträgerstückes 7 eingreift. Das stirnseitige Ende dieser Stange 67 ist als Keil 69 ausgebildet, welcher unter eine Rolle 70 gedrückt werden kann, die im Zwischenträgerstück 7 an einem Schwenkhebel 71 (Fig.9) gelagert ist, der im Zwischenträgerstück 7 um einen Bolzen 72 schwenkbar gelagert ist. Das andere Ende dieses Schwenkhebels 71 ist gegabelt ausgebildet, wobei die beiden Arme 73 symmetrisch zur Achse 29 jeweils mit einer Nase 75 auf die den Spannkrallen 26 abgewendete Stirnfläche 74 des Spannringes 38 drücken. Wenn also der Kolben 65 aus dem Zylinder 64 ausgefahren wird, so bewirkt der Keil 69 eine Verschwenkung des Hebels 71 derart, daß der Spannring 38 abgesenkt und dadurch die Spannkrallen 26 geöffnet werden. Wie Fig.8 zeigt, ist der Abstützteil 34 als Hülse mit der Öffnung 35 ausgebildet, wobei die Schrägflächen 40 der Spannkrallen 26 auf einen verbreiterten Flansch des Spannringes 34 aufgleiten. Dieser Flansch hat Senkbohrungen 76 (Fig.7) zur Aufnahme der Federn 41, deren andere Enden in Senkbohrungen 77 des Spannringes 38 sitzen, an welchem die oberen, mit nach innen gerichteten Fortsätzen versehenen Enden der Spannkrallen 26 schwenkbar gelagert sind (Fig.8).

Der Antrieb 53 für die Verdrehung des Zwischenträgerstückes 7 hat aus Sicherheitsgründen eine Rutschkupplung 78. Ebenfalls aus Sicherheitsgründen ist am Transportwagen 6 ein Fühler 79 (Fig.6) vorgesehen, welcher beim Absenken des Transportwagens 6 anspricht, sobald ein vorbestimmter Aufsetzdruck des Zwischenträgerstückes 7 am Primärgefäß 9 auftritt. Ist dies der Fall, so betätigt dieser Fühler 79 einen Mikroschalter 80, welcher den Transport nach unten des Transportwagens 6 stillsetzt. Damit wird ein Bruch des Primärgefäßes 9 durch übermäßigen, von oben ausgeübten Druck verhindert. Derselbe Fühler 79 wirkt auch, wenn bei der Verschwenkung des Zwischenträgerstückes 7 um die von der Achse des Kolbens 65 gebildete horizontale Achse 86 Widerstände auftreten.

Die Spannkrallen 26 sind an ihrem Außenumfang mit Ausnehmungen versehen, in welche ein federnder Ring 81 eingreift, welcher die Spannkrallen 26 stets in Anlage am Spannring 38 hält. Seitlich sind die Spannkrallen 26 in Schlitzen 82 (Fig.7) einer Hülse 83 geführt, deren Innenwand sich nach unten konisch erweitert und derart eine Führung beim Aufsetzen auf die Deckfläche 43 (Fig.2) des Verschlußstopfens 21 bildet. Oben sind die Spannkrallen durch einen Abdeckteil 84 geschützt.

Die zur Durchflußoptik 52 führende Verdrahtung ist zweckmäßig gleichfalls durch den Wechselverschluß 60 als Steckverbindung hindurchgeführt (nicht dargestellt), um bei einem Spannzangenwechsel die elektrische Verbindung zur Durchflußoptik nicht gesondert herstellen zu müssen.

## Patentansprüche

1. Zwischenträgerstück (7) als Verbindung zwischen einem Primärgefäß (9) und dem Transportwagen (6) eines Probenverteilers (18) zur Verteilung von Probengut aus dem Primärgefäß (9) in Sekundärgefäße (12), insbesondere für medizinische oder technische Tests, welches als einen Verschlußstopfen (21) des Primärgefäßes (9) erfassende, mit relativ zum Verschlußstopfen (21) beweglichen Spannbauteilen (24) versehene Zange (48) ausgebildet ist, die mit einer Leitung (13) für ein gasförmiges Medium, insbesondere Luft, zum Anschluß an einen Diluter sowie mit einer Öffnung (35) zur Aufnahme eines Ausgußrohres (22) des Verschlußstopfens (21) versehen ist, welches Ausgußrohr (22) in einer Ausgußstellung des Primärgefäßes (19) nach unten gerichtet ist, wobei das Zwischenträgerstück (7) einen Anschluß (31) zur schwenkbaren Verbindung mit dem Transportwagen (6) aufweist, so daß das Zwischenträgerstück (7) aus einer Lage, in welcher das Ausgußrohr (22) nach oben gerichtet ist, in die Ausgußstellung und wieder zurück verschwenkbar ist, und wobei ein mit dem Transportwagen (6) mitlaufender Antrieb (53) für diese Schwenkbewegung vorgesehen ist, dadurch gekennzeichnet, daß die Spannbauteile (24) auf den Verschlußstopfen (21) von oben aufsetzbar und radial zur Längsachse (29) des Primärgefäßes (9) beweglich sind, und daß ein mit dem Transportwagen (6) mitlaufender Antrieb (54) für die Bewegung der Spannbauteile (24) vorgesehen ist.

2. Zwischenträgerstück nach Anspruch 1, dadurch gekennzeichnet, daß die Antriebe (53,54) am Transportwagen (6) vorgesehen sind und unterschiedliche Zwischenträgerstücke (7) mittels eines Wechselverschlusses (60) an diese Antriebe (53,54) anschließbar sind.

3. Zwischenträgerstuck nach Anspruch 2, dadurch gekennzeichnet, daß ein Grundkörper (28) des Zwischenträgerstückes (7) an einer Stirnseite (30) den Wechselverschluß (60) zum Anschluß an ein Drehgelenk mit horizontaler Drehachse trägt und daß dieser Grundkörper (28) an seinem anderen Stirnende mit einer Aussparung (27) zur Lagerung der Spannbauteile (24) versehen ist, wobei die Achse (29) dieser Lagerung normal zur Längsachse des Grundkörpers (28) verläuft.

4. Zwischenträgerstück nach Anspruch 2 oder 3, dadurch gekennzeichnet, daß die Leitung (13) für das gasförmige Medium den Wechselverschluß (60) durchsetzt, welcher vorzugsweise als Steckverbindung (61) ausgebildet ist.

5. Zwischenträgerstück nach einem der Ansprüche 1 bis 4, dadurch gekennzeichnet, daß die Spannbauteile (24) als Spannkrallen (26) ausgebildet sind, die um den Umfang des Verschlußstopfens (21) verteilt an diesem angreifen.

6. Zwischenträgerstück nach Anspruch 5, dadurch gekennzeichnet, daß die Spannkrallen (26) längsbeweglich und schwenkbar im Grundkörper (28) gelagert sind und jeweils an ihren dem Primärgefäß (9) abgewandten Ende an einem gemeinsamen Spannring (38) anliegen, der die Öffnung (35) für das Ausgußrohr (22) umgibt und in deren Achsrichtung durch einen Antrieb, z.B. einen im Grundkörper (28) gelagerten Schwenkhebel (71), bewegbar ist.

7. Zwischenträgerstück nach Anspruch 6, dadurch gekennzeichnet, daß der Schwenkhebel (71) an seinem einen, vorzugsweise mit Gabelarmen (73) versehenen, Ende, vorzugsweise mittels einer Nase (75), auf den Spannring (38) drückt und an seinem anderen Ende mit einer Rolle (70) versehen ist, die mit einem Keil (69) des im Transportwagen (6) angeordneten Antriebes (54) für die Bewegung der Spannbauteile (24) zusammenwirkt, welcher Keil (69) im Transportwagen (6) längsverschiebbar geführt ist.

8. Zwischenträgerstück nach Anspruch 7, dadurch gekennzeichnet, daß der Keil (69) in einer Hülse (58) geführt ist, die durch den Antrieb (53) für die Schwenkbewegung des Zwischenträgerstückes (7) um ihre Längsachse verdrehbar ist.

9. Zwischenträgerstück nach einem der Ansprüche 4 bis 8, dadurch gekennzeichnet, daß der Keil (69) ein Mittelstück der Steckverbindung (61) bildet.

10. Zwischenträgerstück nach einem der Ansprüche 1 bis 9, dadurch gekennzeichnet, daß der Antrieb (53) für die Schwenkbewegung des Zwischenträgerstückes (7) einen Elektromotor (55) und der Antrieb (54) für die Bewegung der Spannbauteile (24) einen pneumatischen Zylinder (64) aufweisen.

## Claims

1. Intermediate member piece (7) as a connection between a primary receptacle (9) and a transport carriage (6) of a sample distributor (19) for distributing sample material from the primary receptacle (9) into secondary receptacles (12), particularly for medical or technical tests, said intermediate member piece being constructed as a clamp (48) for gripping a closing plug (21) of the primary receptacle (9) and being provided with grip elements (24) movable in relation to the closing plug (21), said clamp being provided with a conduit (13) for a gaseous medium, particularly air, for connecting it with a dilutor, as well as including an aperture (35) for receiving a pouring spout (22) of the closing plug (21), said pouring spout (22) being directed downwards in a pouring position of the primary receptacle (19), said intermediate member piece (7) having a support for pivotal connection with the transport carriage (6) such that the intermediate member piece (7) is pivotal from a position, where the pouring spout (22) is directed upwards, into the pouring position and back again, drive means (53) running with the transport carriage (6) being provided for such pivotal movement, characterized in that the grip elements (24) are capable of being put onto the closing plug (21) from above and being radially movable to the longitudinal axis (29) of the primary receptacle (9), and that drive means (54) running with the transport carriage (6) being provided for moving the grip elements (24).

2. Intermediate member according to claim 1, characterized in that said drive means (53, 54) are located on the transport carriage (6), different intermediate member pieces (7) being connectable with said drive means (53, 54) by means of a converter shutter (60).

3. Intermediate member according to claim 2, characterized in that a base body (28) of the intermediate member piece (7) supports the converter shutter (60) on one front face (30) for connection with a swivel joint having a horizontal axis of rotation, and that the base body (28) has a recess (27) on its other front face for bearing the grip elements (24), the axis of (29) of said bearing extending normally to the longitudinal axis of the base body (28).

4. Intermediate member according to claim 2 or 3, characterized in that the conduit (13) for the gaseous medium intersects the converter shutter which is formed preferably as a plug connection (61).

5. Intermediate member according to any of claims 1 to 4, characterized in that the grip elements (24) are formed as grip claws (26) engaging the circumference of the closing plug (21) in spaced relationship to one another.

6. Intermediate member according to claim 5, characterized in that the grip claws (26) are supported on the base body so as to be movable in longitudinal direction as well as pivotal, their respective end averted from the primary receptacle (9) engaging a common clamping ring (38) which surrounds the aperture (35) for the pouring spout (22) and being movable in axial direction thereof by drive means, e.g. by a pivoting lever (71) supported on the base body (28).

7. Intermediate member according to claim 6, characterized in that the pivoting lever (71) at one end, preferably provided with fork arms (73), presses onto the clamping ring (38), preferably by means of a nose (75), and at the other end is provided with a roll (70) cooperating with a wedge (69) of the drive means, which are located in the transport carriage (6), for moving the grip elements (24) , the wedge (69) being displaceably guided in longitudinal direction in the transport carriage (6).

8. Intermediate member according to claim 7, characterized in that the wedge (68) is guided in a sleeve (58) to be tured about its longitudinal axis by the drive means (53) for pivoting the intermediate member piece (7).

9. Intermediate member according to any of claims 4 to 8, characterized in that the wedge (69) is formed as a centre piece of the plug connection (61).

10. Intermediate member according to any of claims 1 to 9, characterized in that the drive means (53) for pivoting movement of the intermediate member piece (7) comprises an electric motor (55) and the drive means (54) for moving the grip elements (24) has a pneumatic cylinder (64).

## Revendications

1. Dispositif à porteuse intermédiaire (7) formant une connection entre un récipient primaire (9) et un chariot de transport (6) d'un distributeur d'échantillons (18) pour distribuer des échantillons du récipient primaire (9) dans des récipients secondaires (12), particulièrement pour des tests médicaux ou techniques, ledit dispositif étant formé comme griffe (48) saisissant un bouchon de fermeture (21) du récipient primaire (9) et comprenant des éléments de serrage (24) amovibles par rapport au bouchon de fermeture (21), ce griffe étant prévu d'un conduit (13) pour un milieu gazeux, en particulier de l'air, pour le raccord à un dilueur, et d'une ouverture (35) pour le logement d'un tuyau d'évacuation (22) du bouchon de fermeture (21), ce tuyau d'évacuation (22) dans une position d'évacuation étant dirigé vers le bas, le dispositif à porteuse intermédiaire (7) comprenant un raccord (31) pour une connection pivotante avec le chariot de transport (6) de manière à être capable d'être pivoté d'une position dans laquelle le tuyau d'évacuation (22) est dirigé vers le haut à la position d'évacuation et en arrière, un dispositif d'entraînement se mouvant avec le charriot de transport (6) étant prévu pour effectuer ce mouvement pivotant, charactérisé en ce que les éléments de serrage (24) sont formés pour être mis sur le bouchon de fermeture (21) d'en haut et sont amovibles radialement par rapport à l'axe longitudinal du récipient primaire (6), et en ce qu'un dispositif d'entraînement (54) se mouvant avec le charriot de transport (6) est prévu pour effectuer le mouvement des éléments de serrage (24).

2. Dispositif à porteuse intermédiaire selon la revendication 1, charactérisé en ce que les dispositifs d'entraînement (53, 54) sont prévus sur le chariot de transport (6), et en ce que des dispositifs à porteuse intermédiaire (7) sont connectables avec lesdits dispositifs (53, 54) au moyen d'un obturateur interchangeable (60).

3. Dispositif à porteuse intermédiaire selon la revendication 2, charactérisé en ce qu'un corps de base (28) du dispositif à porteuse intermédiaire (7) porte l'obturateur interchangeable (60) à l'une de ses faces (30) pour la connection avec une articulation à rotation autour d'un axe horizontal, et que ce corps de base (28) est prévu à l'autre face d'un évidement (27) pour le logement des éléments de serrage (24), l'axe (29) de ce logement s'étendant normalement par rapport à l'axe longitudinal du corps de base (28).

4. Dispositif à porteuse intermédiaire selon la revendication 2 ou 3, charactérisé en ce que le conduit (13) pour le milieu gazeux traverse l'obturateur interchangeable (60), celui-ci étant formé, de préférence, comme jonction d'embrochage (61).

5. Dispositif à porteuse intermédiaire selon une des revendications 1 à 4, charactérisé en ce que les éléments de serrage (24) sont formés comme griffes de serrage (26) s'appliquant à la périphérie du bouchon de fermeture (21) en êtant distribuées autour celui-ci.

6. Dispositif à porteuse intermédiaire selon la revendication 5, charactérisé en ce que les griffes de serrage (26) sont logées de façon amovible en direction longitudinale et pivotante au corps de base (28) et s'appliquant à un anneau tendeur (38) commun à son extrémité opposée au récipient primaire (9), ledit anneau tendeur entourant l'ouverture (35) pour le tuyau d' évacuation (22) et se mouvant en direction axiale de celle-ci par un dispositif d'entraînement, par example par un levier pivotant (71) logé au corps de base (28).

7. Dispositif à porteuse intermédiaire selon la revendication 6, charactérisé en ce que le levier pivotant (71) à l' une de ses extrémités, de préférence pourvue de bras à fourche (73), presse sur l'anneau tendeur (38), de préférence au moyen d'un taquet (75), tandis qu'à l'autre extrémité il est pourvu d'un rouleau (70) cooperant avec une clavette (69) du dispositif d'entraînement (54) situé dans le chariot de transport (6) pour le mouvement des éléments de serrage (24), ladite clavette étant guidée pour un déplacement longitudinal dans le chariot de transport (6).

8. Dispositif à porteuse intermédiaire selon la revendication 7, charactérisé en ce que la clavette (69) est guidée dans une douille (58) qui est mobile autour de son axe longitudinal par le dispositif d'entraînement (53) pour le mouvement pivotant du dispositif à porteuse intermédiaire (7).

9. Dispositif à porteuse intermédiaire selon une des revendications 4 à 8, charactérisé en ce que la clavette (69) forme une pièce moyenne de la jonction d'embrochage (61).

10. Dispositif à porteuse intermédiaire selon une des revendications 1 à 9, charactérisé en ce que le dispositif (53) d'entraînement pour le mouvement pivotant du dispositif à porteuse intermédiaire (7) comprend un moteur éléctrique (55), et que le dispositif d'entraînement (54) pour le mouvement des éléments de serrage (24) présente un vérin pneumatique (64).
